# EUROPEAN PATENT APPLICATION

(11) **EP 4 535 922 A1**
(43) Date of publication of application: **09.04.2025**
(21) Application number: 22943698.5
(22) Date of filing: 24.05.2022
(51) Int. Cl.: H04W 84/06, H04W 64/00

(54) **WIRELESS COMMUNICATION NODE, TERMINAL, AND WIRELESS COMMUNICATION METHOD**

(71) Applicant: NTT DOCOMO, INC., Tokyo 100-6150 (JP)
(72) Inventor: YOSHIOKA Shohei, Tokyo 100-6150 (JP); NAGATA Satoshi, Tokyo 100-6150 (JP); YOU Luhua, Beijing 100190 (CN); SUN Weiqi, Beijing 100190 (CN); WANG Jing, Beijing 100190 (CN); CHEN Lan, Beijing 100190 (CN); ZHAO Jinming, Beijing 100876 (CN); LI Yong, Beijing 100876 (CN)
(74) Representative: Hoffmann Eitle
(86) International application number: PCT/JP2022/021311
(87) International publication number: WO 2023/228294

(57) **Abstract**

A radio communication node includes: a reception unit that acquires at least one of a position of a radio relay device in the sky at a transmission time or reception time of a signal by a terminal, a position of the radio relay device at a transmission time or reception time of a signal by the radio relay device, and a position of the radio relay device at a transmission time or reception time of a signal by a radio communication node; and a control unit that calculates a propagation delay of a signal transmitted and received between the terminal and the radio communication node via the radio relay device based on at least one of the three positions.

## Description

### TECHNICAL FIELD

The present disclosure relates to a radio communication node, a terminal, and a radio communication method.

### BACKGROUND

The 3rd Generation Partnership Project (3GPP: Registered Trademark) has prepared a specification for the 5th generation mobile communication system (which may be called 5G, New Radio (NR), or Next Generation (NG)), and is also in the process of specifying the next generation called Beyond 5G, 5G Evolution, or 6G.

The 3GPP specifies a technology for estimating the position information of a terminal (hereinafter, referred to as UE: User Equipment) using techniques such as Multi-RTT (Round Trip Time), DL-TDOA (Downlink Time Difference of Arrival), and UL-TDOA (Uplink Time Difference of Arrival) (for example, NON-PATENT LITERATURE 1).

In addition, NTN (Non-Terrestrial Network) has been studied in 3GPP. In the NTN, a satellite, which is a radio relay device in the sky, is used to provide services to areas that cannot be covered by a terrestrial network due to cost or other reasons.

### CITATION LIST

### NON-PATENT LITERATURE

NON-PATENT LITERATURE 1: 3GPP TS 38.305 V17.0.0 March 2022

### SUMMARY OF THE INVENTION

It is important to keep track of the position of a terminal in the NTN. When a satellite moves, a radio relay device, that is, the position of the satellite used as a reference for calculating the position of the terminal also changes. However, in the conventional technology, the position of the terminal is calculated without considering the movement of the satellite, that is, the position of the terminal based on an optional position of the satellite is calculated. For this reason, when the position of the satellite used as a reference for calculating the position of the terminal changes due to the movement of the satellite, there is a problem that a large error may occur in the propagation delay of a radio wave propagating between the terminal and the radio communication node via the satellite.

Therefore, the following disclosure has been made in view of such circumstances, and an object of the present disclosure is to provide a radio communication node, a terminal, and a radio communication method with which it is possible to realize an appropriate calculation of a propagation delay even when a radio relay device in the sky moves.

An aspect of the present disclosure is a radio communication node including: a reception unit that acquires at least one of a position of a radio relay device in the sky at a transmission time or reception time of a signal by a terminal, a position of the radio relay device at a transmission time or reception time of a signal by the radio relay device, and a position of the radio relay device at a transmission time or reception time of a signal by a radio communication node; and a control unit that calculates a propagation delay of a signal transmitted and received between the terminal and the radio communication node via the radio relay device based on at least one of the three positions.

An aspect of the present disclosure is a radio communication method including: a step of, by a radio communication node, acquiring at least one of a position of a radio relay device in the sky at a transmission time or reception time of a signal by a terminal, a position of the radio relay device at a transmission time or reception time of a signal by the radio relay device, and a position of the radio relay device at a transmission time or reception time of a signal by the radio communication node; and a step of, by the radio communication node, calculating a propagation delay of a signal transmitted and received between the terminal and the radio communication node via the radio relay device based on at least one of the three positions.

### BRIEF DESCRIPTION OF DRAWINGS

[FIG. 1] FIG. 1 is an overall schematic diagram of a radio communication system 10.
[FIG. 2] FIG. 2 is a diagram illustrating a frequency range used in the radio communication system 10.
[FIG. 3] FIG. 3 is a diagram illustrating a configuration example of radio frames, subframes and slots used in the radio communication system 10.
[FIG. 4] FIG. 4 is a functional block diagram of UE 200.
[FIG. 5] FIG. 5 is a functional block diagram of a gNB 100.
[FIG. 6] FIG. 6 is a functional block diagram of an LMF 300.
[FIG. 7] FIG. 7 is a diagram for explaining a protocol.
[FIG. 8] FIG. 8 is a diagram for explaining a problem when a satellite moves.
[FIG. 9] FIG. 9 is a diagram for explaining a basic operation of the radio communication system 10 that calculates a propagation delay.
[FIG. 10] FIG. 10 is a diagram for explaining a method of calculating position P1.
[FIG. 11] FIG. 11 is a diagram for explaining a basic operation of the radio communication system 10 that calculates a propagation delay.
[FIG. 12] FIG. 12 is a diagram for explaining a method of calculating position P1.
[FIG. 13] FIG. 13 is a diagram for explaining a basic operation of the radio communication system 10 that calculates a propagation delay.
[FIG. 14] FIG. 14 is a diagram for explaining a method of calculating a satellite position.
[FIG. 15] FIG. 15 is a diagram illustrating an example of a hardware configuration of the gNB 100 and the UE 200.
[FIG. 16] FIG. 16 is a diagram illustrating an example of a configuration of a vehicle 2001.

### DETAILED DESCRIPTION OF THE INVENTION

An embodiment will be described below with reference to the drawings. Note that the same or similar reference numerals have been attached to the same functions and configurations, and a description thereof will be omitted as appropriate.

### [Embodiment]

### (1) Overall schematic configuration of radio communication system 10

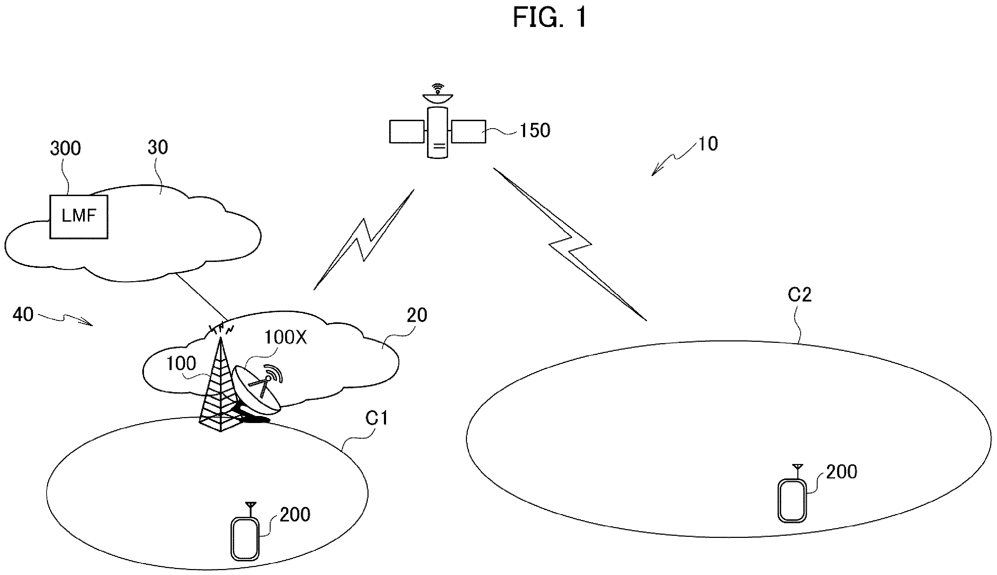

FIG. 1 is an overall schematic diagram of a radio communication system 10 according to a present embodiment. The radio communication system 10 is a radio communication system according to 5G New Radio (NR), and includes a Next Generation-Radio Access Network 20 (hereinafter, referred to as NG-RAN 20) and a terminal 200 (User Equipment 200, hereinafter, referred to as UE 200).

The radio communication system 10 may be a radio communication system according to a scheme called Beyond 5G, 5G Evolution, or 6G.

The NG-RAN 20 includes a radio base station 100 (hereinafter, gNB 100). The specific configuration of the radio communication system 10 including the number of gNBs and UEs is not limited to the example illustrated in FIG. 1.

The NG-RAN 20 actually includes a plurality of NG-RAN nodes, specifically gNBs (or ng-eNBs), and is connected to a core network 30 (for example, 5GC) according to 5G. The NG-RAN 20 and the core network 30 may be simply referred to as a network.

The gNB 100 is a radio base station according to 5G, and performs radio communication with the UE 200 according to 5G. By controlling radio signals transmitted from a plurality of antenna elements, the gNB 100 and the UE 200 can support Massive MIMO (Multiple-Input Multiple-Output) that generates a more directional beam BM, carrier aggregation (CA) that uses a plurality of component carriers (CCs) bundled together, dual connectivity (DC) that simultaneously performs communication to two or more transport blocks between the UE and each of the two NG-RAN nodes, and the like.

The core network 30 includes a network device. The network device may include an LMF (Location Management Function) 300. The network device may include an AMF (Access and Mobility Management Function). The network device may be an E-SMLC (Evolved Serving Mobile Location Centre). In the following description, a case will be mainly described in which the network device is the LMF 300. The gNB 100 and the LMF 300 constitute a radio communication node 40.

In the embodiment, a non-terrestrial network (hereinafter, referred to as NTN) is assumed. In the NTN, a non-terrestrial network such as an artificial satellite 150 (hereinafter, referred to as satellite 150) is used to provide services to areas that cannot be covered by a terrestrial network (hereinafter, referred to as TN) due to cost and other reasons. The NTN makes it possible to provide more reliable services. For example, the NTN is assumed to be applied to IoT (Inter of things), ships, buses, trains, and critical communications. In addition, the NTN has scalability by efficient multicast or broadcast.

Note that a network that includes the gNB 100 and the UE 200 without including the satellite 150 may be called a terrestrial network (TN), as opposed to the NTN.

The gNB 100 has an NTN gateway 100X. The NTN gateway 100X transmits a downlink signal to the satellite 150. The NTN gateway 100X receives an uplink signal from the satellite 150. The gNB 100 has a cell C1 as a coverage area.

The satellite 150 relays a downlink signal received from the NTN gateway 100X to the UE 200. The satellite 150 relays an uplink signal received from the UE 200 to the NTN gateway 100X. The satellite 150 have a cell C2 as a coverage area. The satellite 150 may be considered as a transmission-reception point (TRP).

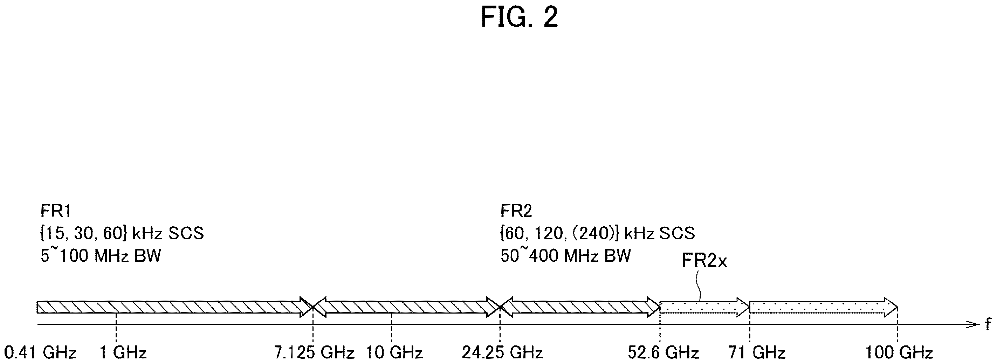

The radio communication system 10 corresponds to a plurality of frequency ranges (FR). FIG. 2 illustrates the frequency ranges used in the radio communication system 10.

As illustrated in FIG. 2, the radio communication system 10 supports FR1 and FR2. The frequency band of each FR (frequency range) is as follows:

- FR1: 410 MHz to 7.125 GHz
- FR2: 24.25 MHz to 52.6 GHz

In FR1, Sub-Carrier Spacing (SCS) of 15, 30 or 60 kHz may be used, and a bandwidth (BW) of 5 to 100 MHz may be used. FR2 has a higher frequency than FR1, and SCS of 60 or 120 kHz (may include 240 kHz) may be used, and a bandwidth (BW) of 50 to 400 MHz may be used.

The SCS may be interpreted as numerology. The numerology is defined in 3GPP TS38.300, and corresponds to one sub-carrier spacing in the frequency domain.

Further, the radio communication system 10 also corresponds to a higher frequency band than that of FR2. Specifically, the radio communication system 10 corresponds to a frequency band exceeding 52.6 GHz and up to 71 GHz or 114.25 GHz. Such a higher frequency band may be referred to as "FR2x" for the sake of convenience.

In order to solve the problem that the effect of phase noise becomes large in a high frequency band, when a band exceeding 52.6 GHz is used, Cyclic Prefix-Orthogonal Frequency Division Multiplexing (CP-OFDM)/Discrete Fourier Transform-Spread (DFT-S-OFDM) having larger Sub-Carrier Spacing (SCS) may be applied.

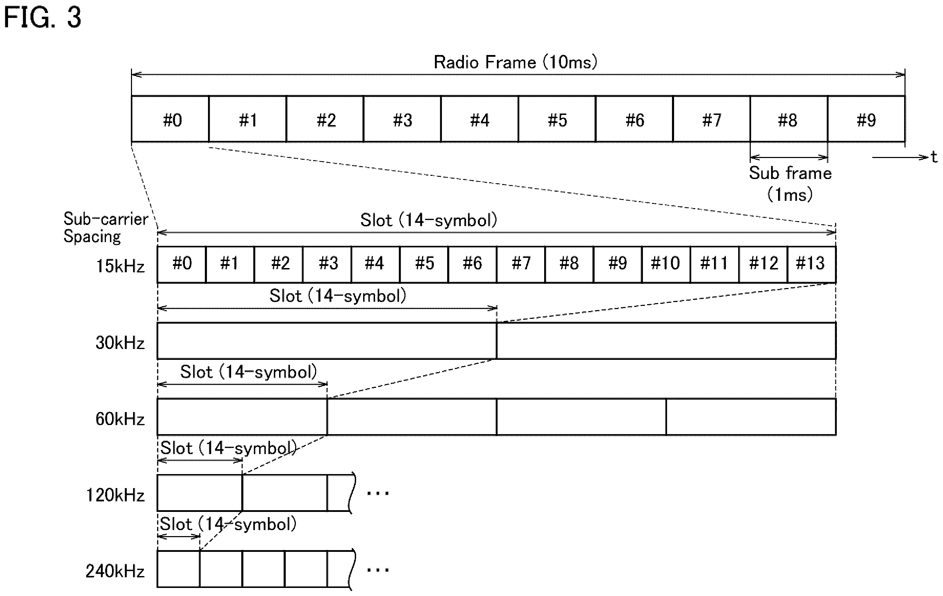

FIG. 3 illustrates a configuration example of radio frames, subframes and slots used in the radio communication system 10.

As illustrated in FIG. 3, one slot is constituted of 14 symbols, and, the symbol period (and slot period) becomes shorter as the SCS becomes larger (wider). The SCS is not limited to the spacing (frequency) illustrated in FIG. 3. For example, 480 kHz, 960 kHz, or the like may be used.

Note that the number of symbols constituting one slot may not necessarily be 14 symbols (for example, 28 or 56 symbols). Further, the number of slots for each subframe may vary depending on the SCS.

Note that the time direction (t) illustrated in FIG. 3 may be referred to as a time domain, a symbol period, symbol time, or the like. The frequency direction may be referred to as a frequency domain, a resource block, a sub-carrier, a bandwidth part (BWP), or the like.

A DMRS is a type of reference signal and is prepared for various channels. Here, unless otherwise specified, it may mean a DMRS for a downlink data channel, specifically, for a PDSCH (Physical Downlink Shared Channel). However, a DMRS for an uplink data channel, specifically, for a PUSCH (Physical Uplink Shared Channel), may be interpreted in the same way as a DMRS for a PDSCH.

The DMRS may be used in a device, for example, in the UE 200 for channel estimation as part of coherent demodulation. The DMRS may be present only in a resource block (RB) used for PDSCH transmission.

The DMRS may have multiple mapping types. Specifically, the DMRS has mapping type A and mapping type B. In mapping type A, a first DMRS is placed in the second or third symbol of the slot. In mapping type A, the DMRS may be mapped based on the slot boundaries, regardless of where the actual data transmission begins in the slot. The reason why the first DMRS is placed in the second or third symbol of the slot may be interpreted because the first DMRS is placed after control resource sets (CORESET).

In mapping type B, a first DMRS may be placed in the first symbol of the data allocation. That is, the position of the DMRS may be given relative to where the data is placed, rather than relative to the slot boundaries.

In addition, the DMRS may have multiple types. Specifically, the DMRS has Type 1 and Type 2. Type 1 and Type 2 differ in mapping in the frequency domain and in the maximum number of orthogonal reference signals. In Type 1, up to 4 orthogonal signals can be output with single-symbol DMRS, and in Type 2, up to 8 orthogonal signals can be output with double-symbol DMRS.

### (2) Functional block configuration of radio communication system 10

Next, a functional block configuration of the radio communication system 10 will be described.

First, a functional block configuration of the UE 200 will be described.

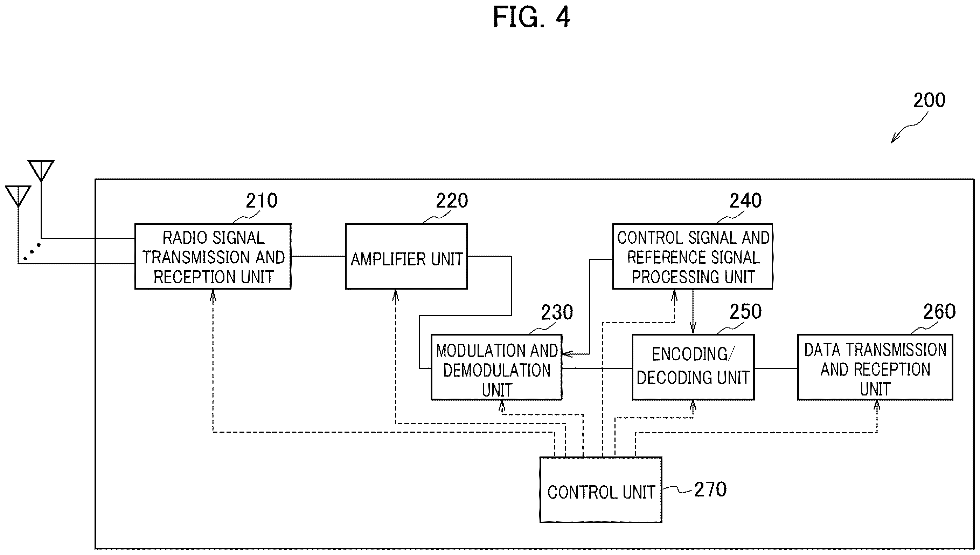

FIG. 4 is a functional block diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives a radio signal according to NR. The radio signal transmission and reception unit 210 supports Massive MIMO, CA that uses a plurality of CCs bundled together, and DC that simultaneously performs communication between the UE and each of two NG-RAN nodes.

The amplifier unit 220 is configured by a PA (Power Amplifier)/LNA (Low Noise Amplifier) and the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation and demodulation, a transmission power configuration, a resource block allocation, and the like for each predetermined communication destination (gNB 100 or another gNB). Cyclic Prefix-Orthogonal Frequency Division Multiplexing (CP-OFDM)/Discrete Fourier Transform-Spread (DFT-S-OFDM) may be applied in the modulation and demodulation unit 230. In addition, DFT-S-OFDM may be used not only for an uplink (UL), but also for a downlink (DL).

The control signal and reference signal processing unit 240 performs processing regarding various control signals transmitted and received by the UE 200, and processing regarding various reference signals transmitted and received by the UE 200.

Specifically, the control signal and reference signal processing unit 240 receives various control signals transmitted from the gNB 100 via a predetermined control channel, for example, the control signals (messages) for the radio resource control layer (RRC). The control signal and reference signal processing unit 240 also transmits various control signals to the gNB 100 via a predetermined control channel.

The control signal and reference signal processing unit 240 performs processing using a reference signal (RS), such as a Demodulation Reference Signal (DMRS) and a Phase Tracking Reference Signal (PTRS).

The DMRS is a known reference signal (pilot signal) between a UE 200-specific base station and the UE 200 for estimating a fading channel used for data demodulation. The PTRS is a UE 200-specific reference signal for estimating phase noise, which becomes a problem in a high frequency band.

In addition to the DMRS and PTRS, a reference signal may include a Channel State Information-Reference Signal (CSI-RS), a Sounding Reference Signal (SRS), a Positioning Reference Signal (PRS) for position information, and the like.

The channel includes a control channel and a data channel. The control channel includes a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI)), a Physical Broadcast Channel (PBCH), and the like.

In addition, the data channel may include a PDSCH (Physical Downlink Shared Channel), a PUSCH (Physical Uplink Shared Channel), and the like. "Data" refers to data transmitted via the data channel. The data channel may be read as meaning a shared channel.

Here, the control signal and reference signal processing unit 240 may receive downlink control information (DCI). The DCI includes fields for storing DCI Formats, a Carrier indicator (CI), a BWP indicator, an FDRA (Frequency Domain Resource Assignment), a TDRA (Time Domain Resource Assignment), an MCS (Modulation and Coding Scheme), an HPN (HARQ Process Number), an NDI (New Data Indicator), an RV (Redundancy Version), and the like as existing fields.

The value stored in the DCI Format field is an information element for specifying a format of the DCI. The value stored in the CI field is an information element for specifying a CC to which the DCI is applied. The value stored in the BWP indicator field is an information element for specifying a BWP to which the DCI is applied. The BWP that can be specified by a BWP indicator is configured by an information element (BandwidthPart-Config) included in an RRC message. The value stored in the FDRA field is an information element for specifying a frequency domain resource to which the DCI is applied. The frequency domain resource is specified by a value stored in the FDRA field and an information element (RA Type) included in the RRC message. The value stored in the TDRA field is an information element for specifying a time domain resource to which the DCI is applied. The time domain resource is specified by a value stored in the TDRA field and an information element (pdsch-TimeDomainAllocationList, pusch-TimeDomainAllocationList) included in the RRC message. The time domain resource may be specified by a value stored in the TDRA field, and the default table. The value stored in the MCS field is an information element for specifying an MCS to which the DCI is applied. The MCS is specified by a value stored in the MCS, and the MCS table. The MCS table may be specified by an RRC message, or specified by RNTI scrambling. The value stored in the HPN field is an information element for specifying a HARQ process to which the DCI is applied. The value stored in the NDI field is an information element that specifies whether the data to which the DCI is applied is the initial transmission data. The value stored in the RV field is an information element for specifying the redundancy of data to which the DCI is applied.

In the embodiment, the control signal and reference signal processing unit 240 constitutes a transmission unit that transmits to the radio communication node 40, a position of the radio relay device (satellite 150) at a transmission and reception time (transmission time or reception time) of a signal by the UE 200. The radio relay device has a function of relaying a signal transmitted and received between the gNB 100 and the UE 200. Specifically, the radio relay device has a function of receiving a signal (downlink signal) transmitted from the gNB 100 and transmitting it to the UE 200, and a function of receiving a signal (uplink signal) transmitted from the UE 200 and transmitting it to the gNB 100. The control signal and reference signal processing unit 240 may transmit two or more uplink reference signals at different timings on the time axis via the NTN. The uplink reference signal may be referred to as a UL-SRS (Sounding Reference Signal). The radio relay device is not limited to the satellite 150, and may be an airborne object provided with a radio relay device. The airborne object may be a balloon, an airship, a High Altitude Platform Station (HAPS), or the like. The radio relay device is positioned in the sky at a predetermined distance from the surface of the earth (land surface). The sky generally refers to a position on an orbit in which radio waves can be transmitted and received with the UE 200, the radio communication node 40, and the like in the orbit of the satellite 150.

The encoding/decoding unit 250 performs data division/concatenation, channel coding/decoding, and the like for each predetermined communication destination (gNB 100 or another gNB).

Specifically, the encoding/decoding unit 250 divides the data output from the data transmission and reception unit 260 into predetermined sizes, and performs channel coding on the divided data. The encoding/decoding unit 250 also decodes the data output from the modulation and demodulation unit 230, and concatenates the decoded data.

The data transmission and reception unit 260 transmits and receives a protocol data unit (PDU) and a service data unit (SDU). Specifically, the data transmission and reception unit 260 performs assembly/disassembly of PDU/SDU in a plurality of layers (Media access control layer (MAC), a radio link control layer (RLC), a packet data convergence protocol layer (PDCP) and the like). In addition, the data transmission and reception unit 260 performs error correction and retransmission control of data based on HARQ (Hybrid Automatic Repeat Request).

The control unit 270 controls each functional block constituting the UE 200.

Second, the functional block configuration of the gNB 100 will be described.

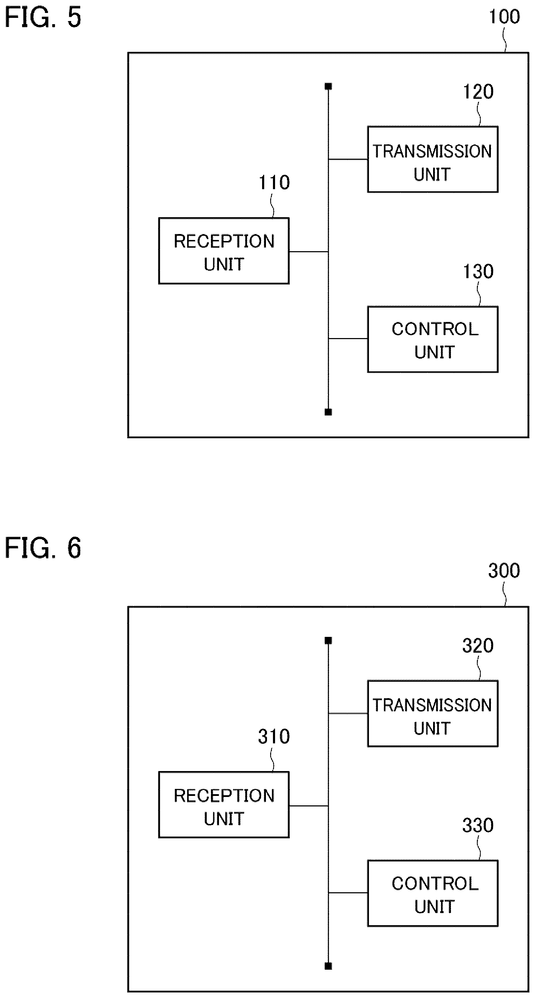

FIG. 5 is a functional block diagram of the gNB 100. As illustrated in FIG. 5, the gNB 100 includes a reception unit 110, a transmission unit 120, and a control unit 130.

The reception unit 110 receives various signals from the UE 200. The reception unit 110 may receive UL signals via PUCCH or PUSCH. In the embodiment, the reception unit 110 constitutes a reception unit that acquires at least one of the position (satellite position P0 or P2) of the satellite 150 at a transmission and reception time (transmission time or reception time) of a signal by the UE 200, the position (satellite position P1) of the satellite 150 at a transmission and reception time (transmission time or reception time) of a signal by the satellite 150, and the position (satellite position P0 or P2) of the satellite 150 at a transmission and reception time (transmission time or reception time) of a signal by the radio communication node 40. The reception unit 110 constitutes a reception unit that receives information (DL-RSTD, timestamp, etc.) transmitted from the UE 200.

The transmission unit 120 transmits various signals to the UE 200. The transmission unit 120 may transmit DL signals via PDCCH or PDSCH. The transmission unit 120 may transmit two or more DL-PRSs (Downlink Positioning Reference Signals) at different timings on the time axis via NTN. The transmission unit 120 may transmit assistance information and report information to the LMF 300. The assistance information and report information may be transmitted via an NRPPa message (NR Positioning Protocol A). The assistance information may include geographic coordinate information of the DL-PRS resource of the TRP, PCI of the TRP, GCI, a TRP ID, a DL-PRS configuration of the TRP, SSB information of the TRP (time/frequency occupancy rate of the SSB), spatial direction information of the DL-PRS resource of the TRP, and the like, which are provided by the gNB 100. The report information may include UL-RTOA (Relative Time of Arrival), a time stamp corresponding to time t0, a time stamp corresponding to time t2, and the like. The details of time t0 and time t2 will be described later.

The control unit 130 controls the gNB 100. In the embodiment, the control unit 130 constitutes a control unit that calculates a propagation delay of a signal transmitted or received between the UE 200 and the radio communication node 40 via the satellite 150 based on at least one of the three positions acquired by the reception unit 110. The control unit 130 may assume a control unit that calculates the propagation delay of the signal based on all of the three positions acquired by the reception unit 110. The control unit 130 may assume a control unit that calculates RTT (Round Trip Time) between the UE 200 and the radio communication node 40 as the propagation delay. The control unit 130 may assume a control unit that calculates the propagation delay of the signal based on one or two of the three positions acquired by the reception unit 110.

Third, the functional block configuration of the LMF 300 will be described.

FIG. 6 is a functional block diagram of the LMF 300. As illustrated in FIG. 6, the LMF 300 includes a reception unit 310, a transmission unit 320, and a control unit 330.

The reception unit 310 receives various signals from the UE 200 and the gNB 100. The reception unit 310 may receive assistance information and report information transmitted from the gNB 100 via an NRPPa message (NR Positioning Protocol A). The reception unit 310 constitutes a reception unit that acquires at least one of the position of the satellite 150 (satellite position P0 or P2) at a transmission and reception time (transmission time or reception time) of a signal by the UE 200, the position of the satellite 150 (satellite position P1) at a transmission and reception time (transmission time or reception time) of a signal by the satellite 150, and the position of the satellite 150 (satellite position P0 or P2) at a transmission and reception time (transmission time or reception time) of a signal by the radio communication node 40. The reception unit 310 constitutes a reception unit that receives information (DL-RSTD, timestamp, etc.) transmitted from the UE 200.

The transmission unit 320 transmits various signals to the UE 200. The transmission unit 320 may transmit assistance information to the UE 200. The assistance information may be transmitted via an NRPPa message (NR Positioning Protocol A).

The control unit 330 controls the LMF 300. In the embodiment, the control unit 330 may assume a control unit that calculates a propagation delay of a signal transmitted or received between the UE 200 and the radio communication node 40 via the satellite 150 based on at least one of the three positions acquired by the reception unit 310. The control unit 330 may assume a control unit that calculates the propagation delay of the signal based on all of the three positions acquired by the reception unit 310. The control unit 330 may assume a control unit that calculates RTT (Round Trip Time) between the UE 200 and the radio communication node 40 as the propagation delay. The control unit 330 may assume a control unit that calculates the propagation delay of the signal based on one or two of the three positions acquired by the reception unit 310.

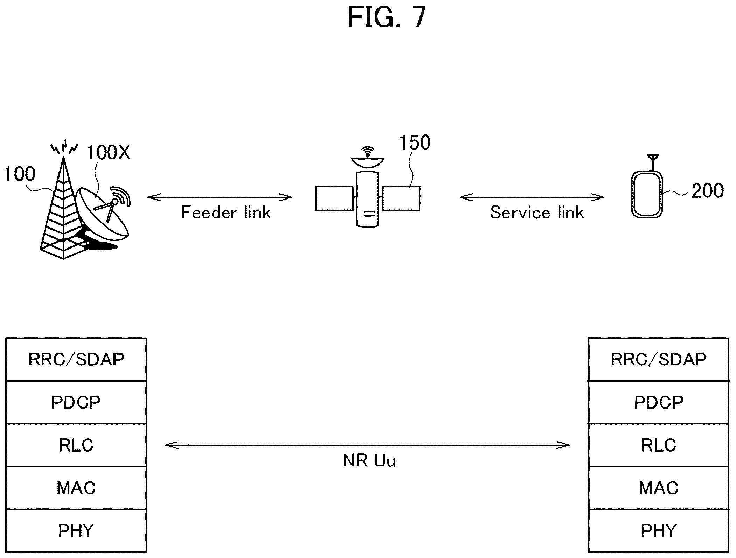

A protocol will be described with reference to FIG. 7. FIG. 7 is a diagram for explaining the protocol. As illustrated in FIG. 7, the gNB 100 has a protocol stack such as PHY, MAC, RLC, PDCP, RRC/SDAP. Similarly, the UE 200 has a protocol stack such as PHY, MAC, RLC, PDCP, RRC/SDAP. The satellite 150 relays communication between the gNB 100 and the UE 200.

Here, the link between the gNB 100 (NTN gateway 100X) and the satellite 150 may be called a Feeder link. The link between the satellite 150 and the UE 200 may be called a Service link. The interface between the gNB 100 and the UE 200 may be called NR Uu.

As the assumption of the network architecture of the NTN, FDD or TTD may be adopted. The cells on the ground may be fixed or movable. The UE 200 may be capable of supporting GNSS (Global Navigation Satellite System). As the UE 200, a handheld device of power class 3 may be assumed in FR1, and a VSAT (Very small aperture terminal) may be assumed at least in FR2.

The network architecture of the NTN may be assumed to a regenerative payload. For example, the function of the gNB 100 may be mounted on a satellite or a flight vehicle. Further, the gNB-DU (Distributed Unit) may be mounted on a satellite or a flight vehicle, and the gNB-CU (Central Unit) may be arranged as a ground station.

The NTN-RSTD is the difference between the time at which the UE 200 receives a reference signal (hereinafter, referred to as reference PRS) and the time at which the UE 200 receives a target reference signal (hereinafter, referred to as target PRS). For example, a description will be given to a case as an example in which the DL-PRS (t0) transmitted at time t0 is the reference PRS, and the DL-PRS (t1) transmitted at time t1 and the DL-PRS (t2) transmitted at time t2 are the target PRS.

The UE 200 may measure NTN-RSTD (t1, t0) at time t1 as NTN-RSTD (Reference Signal Time Difference). NTN-RSTD (t1, t0) may be represented by (Service link propagation delay (t1) + Feeder link propagation delay (t1)) - (Service link propagation delay (t0) + Feeder link propagation delay (t0)). Similarly, the UE 200 may measure NTN-RSTD (t2, t0) at time t2 as NTN-RSTD. NTN-RSTD (t2, t0) may be represented by (Service link propagation delay (t2) + Feeder link propagation delay (t2)) - (Service link propagation delay (t0) + Feeder link propagation delay (t0)).

Note that Service link propagation delay (tx) is a Service link propagation delay at time tx. Feeder link propagation delay (ty) is a Feeder link propagation delay at time ty. Feeder link propagation delay (t0) may be referred to as Reference propagation delay (t0).

Although not particularly limited, the Feeder link propagation delay (ty) may be reported by the gNB 100. For example, the Feeder link propagation delay (ty) may be specified using one way-propagation delay via an NRPPa message reporting the delay between gNB 100 and the satellite 150, distance reporting, sum of K_mac, common TA (N_{TA}, _{common}), or the like. K_mac may be parameters for determining an application timing of configuration received by MAC-CE. Alternatively, the gNB 100 may report a geographic position of the NTN gateway 100X to the LMF 300. The LMF 300 may specify the Feeder link propagation delay (ty) based on the distance between the NTN gateway 100X and the satellite 150. The position of the satellite 150 may be reported from the gNB 100 to the LMF 300. The position of the satellite 150 may be specified based on the position/orbit information of the satellite 150 reported from the gNB 100 to the LMF 300.

Here, the specific control for estimating the position information of the UE 200 based on two or more DL-PRSs has been described as an example, but the same applies to the specific control for estimating the position information of the UE 200 based on two or more UL-SRSs. That is, the specific control described above can be applied to OTDOA Positioning using DL-PRS, OTDOA Positioning using UL-SRS, and Multi-RTT Positioning.

Although the radio communication system 10 calculates a propagation delay based on any one of the positions P0, P1, and P2 in the embodiment, the radio communication system 10 may calculate a propagation delay based on all of the positions P0, P1, and P2. However, it is more preferable to calculate the propagation delay based on all of the positions P0, P1, and P2. This makes it possible to further improve the accuracy of the position estimation of the UE 200.

### (3) Operation of radio communication system 10

Next, an operation of the radio communication system 10 will be described. Specifically, an operation example of the radio communication system 10 will be described that realizes an appropriate calculation of a propagation delay even when the satellite 150 moves.

### (3.1) Assumption and problem

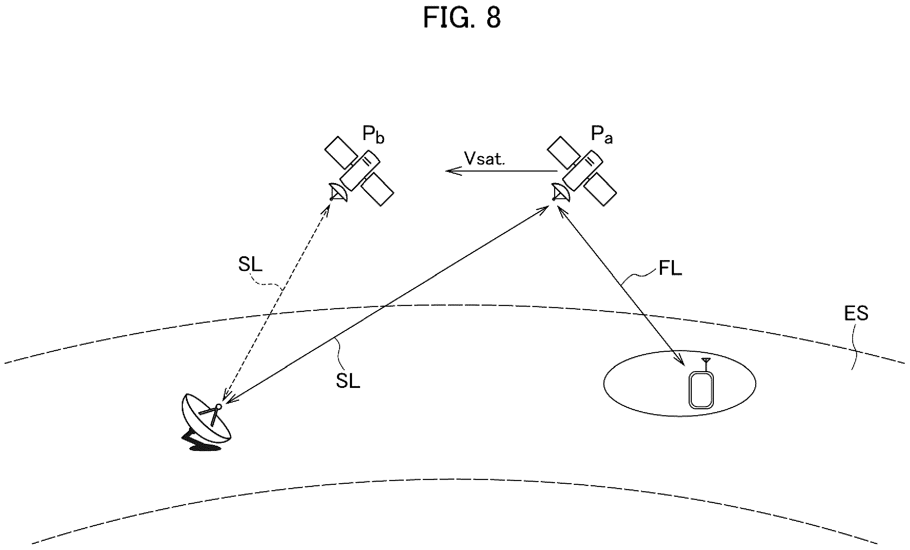

A description will be given to a problem in keeping track of the position of the UE 200 using NTN. FIG. 8 is a diagram for explaining a problem when the satellite 150 moves. As illustrated in FIG. 8, when the satellite 150 moves with respect to the earth surface ES (land surface), the propagation delay calculated by the radio communication node 40 may change depending on the satellite position.

Specifically, when the UE 200 receives the information transmitted from the radio communication node 40 via the satellite 150, the position P_{A} of the satellite 150 at the time when the radio communication node 40 has transmitted the information may be different from the satellite position P_{b} at the time when the satellite 150 has received the information.

When a response of the UE 200 to the information is received by the radio communication node 40 via the satellite 150, the satellite position at the time when the UE 200 has transmitted the response may be different from the satellite position at the time when the satellite 150 has received the response. Thus, when the satellite position changes, the propagation delay of the radio waves (signals) propagating to each of the Feeder link (FL) and the Service link (SL) may differ.

However, in the conventional technology, a propagation delay is calculated by the radio communication node 40 without considering the movement of the satellite 150. Accordingly, the movement of the satellite 150 may cause a large error in the propagation delay calculated by the radio communication node 40.

As a solution to this problem, it is possible to realize an appropriate calculation of the propagation delay even when the satellite 150 moves by considering the movement of the satellite 150, specifically, by considering the satellite position and the time corresponding to the satellite position. In order to realize this technology, the following operation examples are considered. Note that the operation examples described later may be used independently of each other, or may be used in combination with two or more of them.

### (3.2) Operation example

In the following description, an operation example will be described, taking into account the problem described above, which can realize an appropriate calculation of the propagation delay even when the satellite 150 moves.

### (3.2.1) Operation example 1

In operation example 1, a propagation delay is calculated based on DL-TDOA (Down Link-Time Difference of Arrival) .

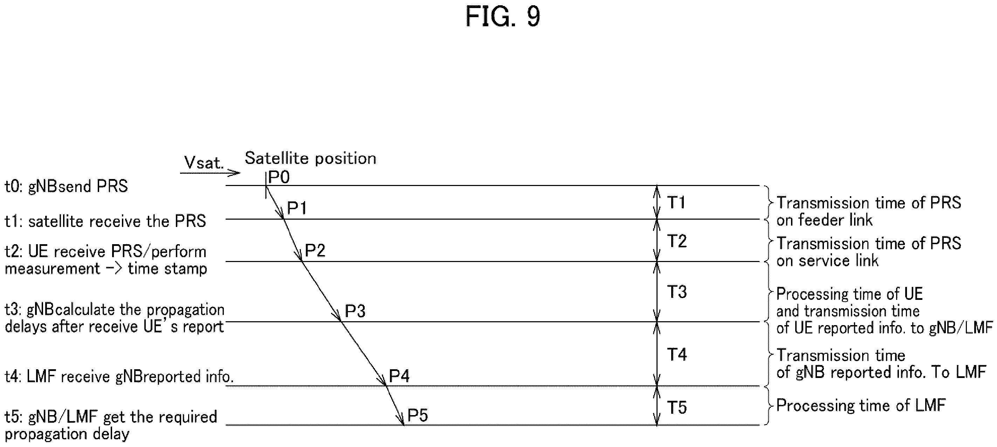

FIG. 9 is a diagram for explaining a basic operation of the radio communication system 10 that calculates a propagation delay. The vertical direction represents the time, and the horizontal direction represents the satellite position.

The processing procedure in the radio communication system 10 is as follows.

(Step 1) The gNB 100 transmits a PRS (Positioning Reference Signal) to the UE 200 via the satellite 150.

(Step 2) The gNB 100 reports the transmission time (time t0) of the PRS and the assistance information to the LMF 300. The LMF 300 transfers the received assistance information to the UE 200.

(Step 3) The UE 200 transmits the DL-RSTD (Down Link-Received Signal Time Difference) measured by the UE 200 and a time stamp corresponding to time t2 to the gNB 100 and/or the LMF 300 via the satellite 150. The details of time t2 will be described later.

(Step 4) The gNB 100 receives the information (DL-RSTD, timestamp, etc.) transmitted from the UE 200. The gNB 100 calculates a propagation delay based on the information transmitted from the UE 200. The propagation delay may include the propagation delay between the TRP and/or GW and the satellite 150, the propagation delay between the RP and the TRP, and the like.

(Step 5) The gNB 100 transmits the information such as time t2 transmitted from the UE 200 and information based on the calculated propagation delay to the LMF 300.

(Step 6) The LMF 300 having received the information based on the propagation delay calculates a propagation delay between the UE 200 and the satellite 150.

Time t0 illustrated in FIG. 9 is the time at which the radio communication node 40 transmits the PRS.

Time t1 is the time at which the satellite 150 relays the PRS transmitted from the radio communication node 40 to the UE 200, that is, transmits the PRS to the UE 200.

Time t2 is the time at which the UE 200 has received the PRS. The UE 200 transmits the measurement result (DL-RSTD) to the radio communication node 40 via the satellite 150. The measurement result may include time t1, time t2 (the timestamp described above), and the measurement result.

Time t3 is the time at which the gNB 100 starts calculating a propagation delay based on the measurement result transmitted from the UE 200. The propagation delay may include the propagation delay between the TRP and/or GW and the satellite 150, the propagation delay between the RP and the TRP, and the like.

Here, if only time t3 is used for calculating a propagation delay, a large error may occur in the propagation delay. This is because when the satellite 150 moves, the satellite position at time t2 at which the position of the UE 200 is measured may be different from the satellite position at time t3 at which the calculation of the propagation delay is started. Therefore, it is preferable to use the reference position of the satellite 150 and the time corresponding to the reference position for calculating the propagation delay.

Hereinafter, the reference position of the satellite 150 may be simply referred to as "position", "satellite position", or "reference position". Further, the time corresponding to the satellite position may be simply referred to as "time", or "reference time". These calculation methods will be described later.

Time t4 is the time at which the LMF 300 receives the information based on the propagation delay calculated by the gNB 100, or the time at which the LMF 300 having received the information based on the propagation delay calculated by the gNB 100 starts calculating the propagation delay between the UE 200 and the satellite 150.

Time t5 is the time at which the LMF 300 completes the calculation of the propagation delay. At time t5, the LMF 300 acquires, for example, the propagation delay between the satellite 150 and the UE 200.

Time T1 is the propagation delay of the PRS on the Feeder link. Specifically, time T1 is the time from when the radio communication node 40 transmits the PRS to when the satellite 150 receives the PRS.

Time T2 is the propagation delay of the PRS on the Service link. Specifically, time T2 is the time from when the satellite 150 transmits the PRS to when the UE 200 receives the PRS.

Time T3 is the time from when the UE 200 receives the PRS to when the radio communication node 40 receives the measurement result of the UE 200. Specifically, time T3 is the time acquired by adding the transmission time until the measurement result reaches the radio communication node 40 to the processing time required for the UE 200 having received the PRS to measure the position.

Time T4 is the time acquired by adding the time required for the gNB 100 to calculate the propagation delay and the time required for the LMF 300 to receive the report information including the propagation delay.

Time T5 is the time at which the LMF 300 having received the report information calculates the propagation delay between the UE 200 and the satellite 150.

### <Calculation method of reference position>

At time t3 illustrated in FIG. 9, the gNB 100 may configure the satellite positions indicated by Alt (Alternative) 1 and Alt 2 below as the reference positions, when calculating the propagation delay.

### <Alt 1>

The gNB 100 may configure the position P0 of the satellite 150 corresponding to time t0, or the position P2 of the satellite 150 corresponding to time t2 as the reference position. These reference positions can be acquired, for example, from the satellite ephemeris. This makes it possible to appropriately calculate the propagation delay while reducing complicated calculations, even when the satellite 150 moves.

### <Alt 2>

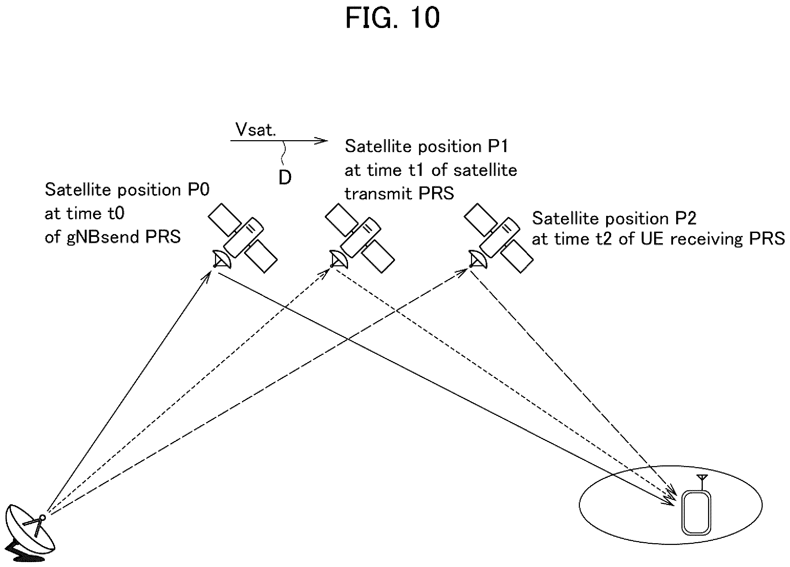

FIG. 10 is a diagram for explaining a method of calculating the position P1. As illustrated in FIG. 10, the satellite 150 moves in the direction D of the arrow in the order of the position P0, the position P1, and the position P2. In this case, the gNB 100 may configure the reference position corresponding to time t1 using the following two options.

### <Option 1>

As described above, the position P0 and the position P2 can be acquired from the satellite ephemeris. The gNB 100 configures the position P1 based on the position P0, the position P2, and the orbit parameters. Specifically, the gNB 100 configures the position P1 at the middle point of the orbit connecting the position P0 corresponding to time t0 and the position P2 corresponding to time t2 by using the orbit parameters. That is, the satellite position at the middle point of the orbit connecting the two known satellite positions can be approximately acquired by using the orbit parameters.

The orbit parameters are parameters for specifying the transition orbit of the satellite 150, and may include an orbit altitude, an orbit inclination angle, an inclination angle, and the like. The orbit parameters may be included in the satellite ephemeris transmitted from the satellite 150.

According to option 1, the accuracy of the reference position P1 can be improved by using the orbit parameters.

### <Option 2>

As described above, the reference position P0 and the reference time t0 can be acquired from the satellite ephemeris. The orbit and velocity of the satellite 150 can be predicted by the satellite ephemeris. The gNB 100 calculates the travel distance ΔPt of the satellite 150 from time t0 until the propagation delay tp elapses. The propagation delay tp is the time from when the gNB 100 transmits a PRS to when the satellite 150 receives the PRS.

The travel distance ΔPt is calculated based on the orbit and velocity of the satellite 150 acquired from the satellite ephemeris, and the propagation delay tp. The gNB 100 configures the position away from the position P0 by the travel distance ΔPt as the reference position P1.

According to option 2, the accuracy of the reference position P1 can be improved by using the orbit and velocity of the satellite 150, and the propagation delay tp.

### <Calculation method of reference time>

When calculating a propagation delay, the gNB 100 may configure the time indicated by Alt 1 and Alt 2 below as the reference time.

### <Alt 1>

The gNB 100 may configure time t0 at which the gNB 100 transmits the PRS, or time t2 at which the UE 200 receives the PRS as the reference time.

### <Alt 2>

The gNB 100 may configure time t1 at which the satellite 150 transmits and receives the PRS as the reference time.

In order to improve the accuracy of the position estimation of the UE 200, it is preferable to configure time t1 as the reference time.

The radio communication node 40 for calculating the reference time t1 is not limited to the gNB 100, and may be the LMF 300. As the processing operation of the gNB 100 or the LMF 300, the following four options are considered.

### <Option 1>

The gNB 100 calculates the reference time t1, and transmits the reference time t1 to the LMF 300 as assistance information via an NRPPa (NR Positioning Protocol A) message.

### <Option 2>

The gNB 100 calculates the reference time t1, acquires the reference position P1 corresponding to the reference time t1, and transmits the reference position P1 to the LMF 300 as the assistance information via an NRPPa message.

### <Option 3>

The LMF 300 calculates the reference time t1, transmits the reference time t1 to the gNB 100, and causes the gNB 100 to calculate a propagation delay.

### <Option 4>

The LMF 300 calculates the reference time t1, acquires the reference position P1 corresponding to the reference time t1, and directly uses the reference position P1 for the position estimation of the UE 200.

### (3.2.2) Operation example 2

In operation example 2, a propagation delay is calculated based on the UL-TDOA (Up Link-Time Difference of Arrival).

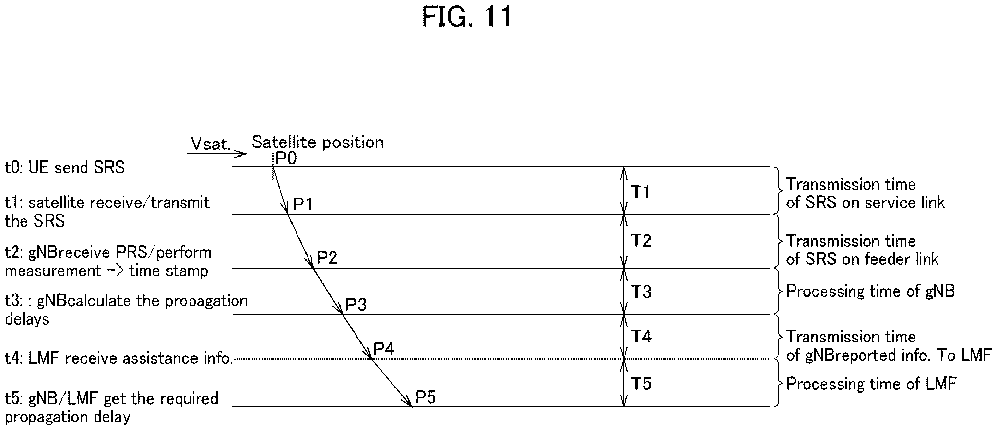

FIG. 11 is a diagram for explaining a basic operation of the radio communication system 10 that calculates a propagation delay. The vertical direction represents the time, and the horizontal direction represents the satellite position.

The processing procedure in the radio communication system 10 is as follows.

(Step 1) The UE 200 transmits an UL-SRS (Up Link-Sounding Reference Signal) to the radio communication node 40 via the satellite 150. The UE 200 transmits, together with the UL-SRS, a time stamp corresponding to time t0 at which the UL-SRS was transmitted.

(Step 2) The gNB 100 transfers the assistance information to the LMF 300. The gNB 100 also reports an UL-RTOA (Relative Time of Arrival) and a timestamp of time t0, together with time t2 at which the UL-SRS was received.

(Step 3) The gNB 100 calculates a propagation delay based on the information transmitted from the UE 200. The propagation delay may include the propagation delay between the TRP and/or GW and the satellite 150, the propagation delay between the RP and the TRP, and the like.

(Step 4) The gNB 100 transmits the information based on the calculated propagation delay to the LMF 300.

(Step 5) The LMF 300 having received the information based on the propagation delay calculates a propagation delay between the UE 200 and the satellite 150.

Time t1 illustrated in FIG. 11 is the time at which the satellite 150 relays the UL-SRS to the radio communication node 40, that is, transmits the received UL-SRS to the radio communication node 40.

Time t2 is the time at which the gNB 100 has received the UL-SRS. Time t2 is a time stamp included in the information transferred from the gNB 100 to the LMN (see 3GPP TS 38.305 V17.0.0). Time t2 is transferred from the gNB 100 to the LMF 300 together with the UL-RTOA (Relative Time of Arrival).

Time t3 is the time at which gNB 100 starts calculating a propagation delay. The propagation delay may include the propagation delay between the TRP and/or GW and the satellite 150, the propagation delay between the RP and the TRP, and the like.

Here, if only time t3 is used for calculating a propagation delay, a large error may occur in the propagation delay. This is because when the satellite 150 moves, the satellite position at time t0 at which the position of the UE 200 is measured may be different from the satellite position at time t3 at which the calculation of the propagation delay is started. Therefore, it is preferable to use the reference position of the satellite 150 and the time corresponding to the reference position for calculating the propagation delay.

Time t4 is the time at which the LMF 300 receives the information based on the propagation delay calculated by the gNB 100, or the time at which the LMF 300 having received the information based on the propagation delay calculated by the gNB 100 starts calculating the propagation delay between the UE 200 and the satellite 150.

Time t5 is the time at which the LMF 300 completes the calculation of the propagation delay. At time t5, the LMF 300 acquires, for example, the propagation delay between the satellite 150 and the UE 200.

Time T1 is the propagation delay of the UL-SRS on the Service link. Specifically, time T1 is the time from when the UE 200 transmits the UL-SRS to when the satellite 150 receives the UL-SRS.

Time T2 is the propagation delay of the UL-SRS on the Feeder link. Specifically, time T2 is the time from when the satellite 150 transmits the UL-SRS to when the radio communication node 40 receives the UL-SRS.

Time T3 is the time at which the radio communication node 40 (for example, gNB 100) having received the UL-SRS calculates the propagation delay.

Time T4 is the time at which the calculation result of the propagation delay performed by the gNB 100 is transmitted to the LMF 300.

Time T5 is the time at which the LMF 300 calculates the propagation delay between the UE 200 and the satellite 150.

### <Calculation method of reference position>

At time t3 illustrated in FIG. 11, the gNB 100 may configure the satellite positions indicated by Alt (Alternative) 1 and 2 below as the reference positions when calculating the propagation delay.

### <Alt 1>

The gNB 100 may configure the position P0 of the satellite 150 corresponding to time t0, or the position P2 of the satellite 150 corresponding to time t2 as the reference position. These reference positions can be acquired, for example, from the satellite ephemeris. This makes it possible to appropriately calculate the propagation delay while reducing complicated calculations, even when the satellite 150 moves.

### <Alt 2>

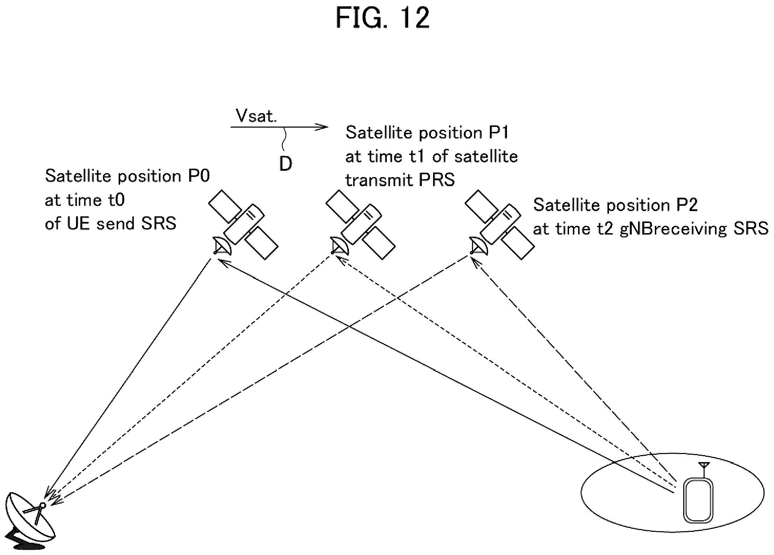

FIG. 12 is a diagram for explaining a method of calculating the position P1. As illustrated in FIG. 12, the satellite 150 moves in the direction D of the arrow in the order of the position P0, the position P1, and the position P2. In this case, the gNB 100 may configure the reference position corresponding to time t1 using the following two options.

### <Option 1>

As described above, the position P0 and the position P2 can be acquired from the satellite ephemeris. The gNB 100 configures the position P1 based on the position P0, the position P2, and the orbit parameters. Specifically, the gNB 100 configures the position P1 at the middle point of the orbit connecting the position P0 corresponding to time t0 and the position P2 corresponding to time t2 by using the orbit parameters.

The orbit parameters are parameters for specifying the transition orbit of the satellite 150, and may include an orbit altitude, an orbit inclination angle, an inclination angle, and the like. The orbit parameters may be included in the satellite ephemeris transmitted from the satellite 150.

According to option 1, the accuracy of the reference position P1 can be improved by using the orbit parameters.

### <Option 2>

As described above, the reference position P2 and the reference time t2 can be acquired from the satellite ephemeris. The orbit and velocity of the satellite 150 can be predicted by the satellite ephemeris. In a case where the propagation delay is tp, the gNB 100 calculates the travel distance ΔPt of the satellite 150 from time t2-tp until the propagation delay tp elapses. The propagation delay tp is the time from when the satellite 150 transmits an SRS to when the gNB 100 receives the SRS. The travel distance ΔPt is calculated based on the orbit and velocity of the satellite 150 acquired from the satellite ephemeris, and the propagation delay tp. The gNB 100 configures the position away from the position P2 by the travel distance ΔPt as the reference position P1.

According to option 2, the accuracy of the reference position P1 can be improved by using the orbit and velocity of the satellite 150 and the propagation delay tp.

### <Calculation method of reference time>

When calculating a propagation delay, the gNB 100 may configure the time indicated by Alt 1 and Alt 2 below as the reference time.

### <Alt 1>

The gNB 100 may configure time t0 at which the UE 200 transmits the UL-SRS, or time t2 at which the gNB 100 receives the UL-SRS as the reference time.

### <Alt 2>

The gNB 100 may configure time t1 at which the satellite 150 transmits and receives the PRS as the reference time.

In order to improve the accuracy of the position estimation of the UE 200, it is preferable to configure time t1 as the reference time.

In operation example 2, the radio communication node 40 calculating the reference time t1 is not limited to the gNB 100, and may be the LMF 300.

### (3.2.3) operation example 3

In operation example 3, a method of calculating RTT (Round Trip Time) will be described. Hereinafter, a "propagation delay" may be the information based on the RTT, and may include an Rx-Tx time difference.

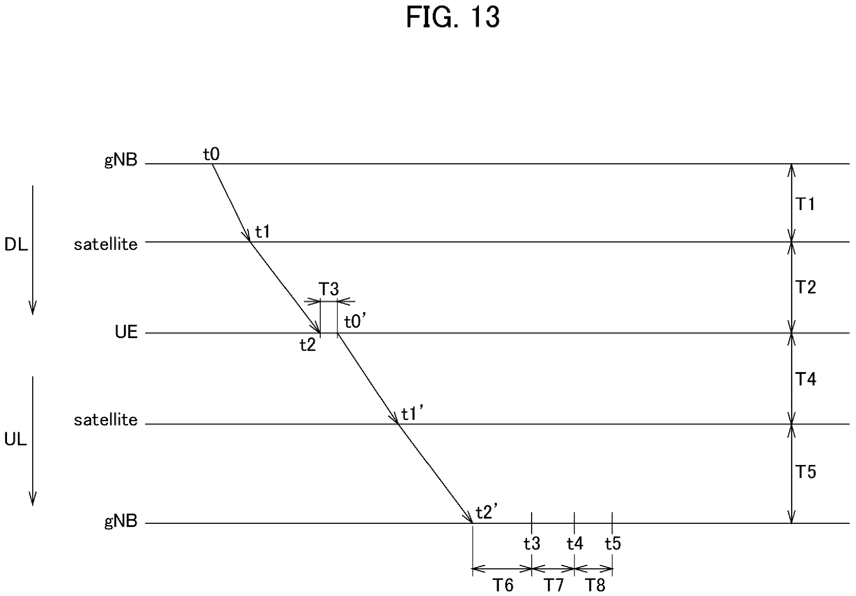

FIG. 13 is a diagram for explaining a basic operation of the radio communication system 10 that calculates a propagation delay. The processing procedure in the radio communication system 10 is as follows.

(Step 1) The gNB 100 transmits a PRS to the UE 200 via the satellite 150.

(Step 2) The gNB 100 reports the transmission time (time t0) of the PRS and the assistance information to the LMF 300. The LMF 300 transfers the received assistance information to the UE 200.

(Step 3) The UE 200 transmits the Rx-Tx time difference of the UE 200 and/or assistance information to the gNB 100 and/or the LMF 300 via the satellite 150. The UE 200 assigns the Rx-Tx time difference to a time stamp corresponding to time t2. The Rx-Tx time difference is equal to the time from time t2 to time t0'. The details of time t2 and time t0' will be described later.

(Step 4) The gNB 100 and/or the LMF 300 receive the information (Rx-Tx time difference, timestamp, etc.) transmitted from the UE 200. The gNB 100 calculates a propagation delay based on the information transmitted from the UE 200. The propagation delay may include RTT between the TRP/GW and the satellite 150, RTT between the TRP/GW and the RP, RTT between the RP and the satellite 150, and the like.

(Step 5) The gNB 100 reports to the LMF 300, the information based on the calculated propagation delay, the Rx-Tx time difference transmitted from the UE 200, and the timestamp transmitted from the UE 200.

(Step 6) The LMF 300 having received the information based on the propagation delay calculates the RTT between the UE 200 and the satellite 150.

Time t0 illustrated in FIG. 13 is the time at which the radio communication node 40 transmits the PRS.

Time t2 is the time at which the UE 200 has received the PRS. The UE 200 transmits the measurement result to the radio communication node 40 via the satellite 150. The measurement result may include time t1, the Rx-Tx time difference, time t2 (time stamp), and the measurement result.

Time t0' is the time at which the UE 200 transmits the UL-SRS to the radio communication node 40 via the satellite 150.

Time t1' is the time at which the satellite 150 relays the UL-SRS to the radio communication node 40, that is, transmits the received UL-SRS to the radio communication node 40.

Time t2' is the time at which the gNB 100 has received the UL-SRS. Time t2' is a timestamp included in the information transferred from the gNB 100 to the LMN (see 3GPP TS 38.305 V 17.0.0). The gNB 100 transfers time t2' to the LMF 300 together with the Rx-Tx time difference.

Time t3 is the time at which gNB 100 starts calculating a propagation delay. The propagation delay may include the propagation delay between the TRP and/or GW and the satellite 150, the propagation delay between the RP and the TRP, and the like.

Here, if only time t3 is used for calculating a propagation delay, a large error may occur in RTT. This is because, as described above, when the satellite 150 moves, the satellite position at the time when the position of the UE 200 is measured may be different from the satellite position at the time when the calculation of the propagation delay is started. Therefore, it is preferable to use the reference position of the satellite 150 and the time corresponding to the reference position for calculating the propagation delay.

Time t4 is the time at which the LMF 300 receives the information based on the propagation delay calculated by the gNB 100, or the time at which the LMF 300 having received the information based on the propagation delay calculated by the gNB 100 starts calculating the propagation delay between the UE 200 and the satellite 150.

Time t5 is the time at which the LMF 300 completes the calculation of the propagation delay. At time t5, the LMF 300 acquires, for example, the propagation delay between the satellite 150 and the UE 200.

Time T1 illustrated in FIG. 13 is the propagation delay of the PRS on the Feeder link.

Time T2 is the propagation delay of the PRS on the Service link.

Time T3 is the time (Rx-Tx time difference) from when the UE 200 receives the PRS to when the UE 200 transmits an UL-SRS.

Time T4 is the propagation delay of the UL-SRS on the Service link.

Time T5 is the propagation delay of the UL-SRS on the Feeder link.

Time T6 is the time at which the gNB 100 having received the UL-SRS calculates the propagation delay.

Time T7 is the time at which the calculation result of the propagation delay performed by the gNB 100 is transmitted to the LMF 300.

Time T8 is the time at which the LMF 300 calculates the propagation delay between the UE 200 and the satellite 150.

### <Calculation method of reference position by gNB 100 >

When calculating a propagation delay, the gNB 100 may configure the reference position of the satellite 150 using the following two options.

### <Option 1>

The gNB 100 may configure a reference position in both UL and DL.

### <Alt 1>

(a) The gNB 100 may configure the satellite position at time t0 (the time at which the gNB 100 transmits the PRS) and the satellite position at time t0' (the time at which the UE 200 transmits the UL-SRS) as the reference positions.
(b) The gNB 100 may configure the satellite position at time t2 (the time at which the UE 200 receives the PRS) and the satellite position at time t2' (the time at which the gNB 100 receives the UL-SRS) as the reference positions.

Alt 1 makes it possible to appropriately calculate the propagation delay while reducing complicated calculations, even when the satellite 150 moves.

### <Alt 2>

The gNB 100 may configure the satellite position at time t1 and the satellite position at time t1' as the reference positions.

Alt 2 makes it possible to improve the accuracy of the position of the satellite 150, even when the satellite 150 moves.

### <Option 2>

The gNB 100 may configure a reference position in either UL or DL.

### <Alt 1>

The gNB 100 may configure the satellite positions at time t0 and time t2, or the satellite positions at time t0' and time t2" as the reference positions.

Alt 1 makes it possible to appropriately calculate the propagation delay while further reducing complicated calculations, even when the satellite 150 moves.

### <Alt 2>

The gNB 100 may configure the satellite position at time t1, or the satellite position at time t1' as the reference position.

Alt 2 makes it possible to improve the accuracy of the position of the satellite 150, even when the satellite 150 moves.

### <Calculation method of reference position by LMF 300 >

When calculating a propagation delay, the LMF 300 may configure the reference position of the satellite 150 using the following two options.

### <Option 1>

As described above, if the gNB 100 configures a reference position in both UL and DL, in order to improve the accuracy of the reference position, the LMF 300 may configure the reference position as follows:

### <Alt 1>

The LMF 300 configures the satellite position corresponding to time t1 or the satellite position corresponding to time t1' as the reference position P1. The reference position P1 is the satellite position at the time when the satellite 150 transmits and receives the PRS, or the satellite position at the time when the satellite 150 transmits and receives the UL-SRS.

### <Alt 2>

The LMF 300 configures the satellite position corresponding to any time between time t1 and time t1' as the reference position P1.

### <Option 2>

As described above, if the satellite position at time t1 or the satellite position at time t1' is configured as the reference position, the LMF 300 may configure the reference position as follows.

### <Alt 1>

Similar to the gNB 100, the LMF 300 may configure the satellite positions at time t0 and at time t2, or the satellite positions at time t0' and time t2' as the reference positions.

### <Alt 2>

Similar to the gNB 100, the LMF 300 may configure the satellite position at time t1, or the satellite position at time t1' as the reference position.

### <Calculation method of reference position>

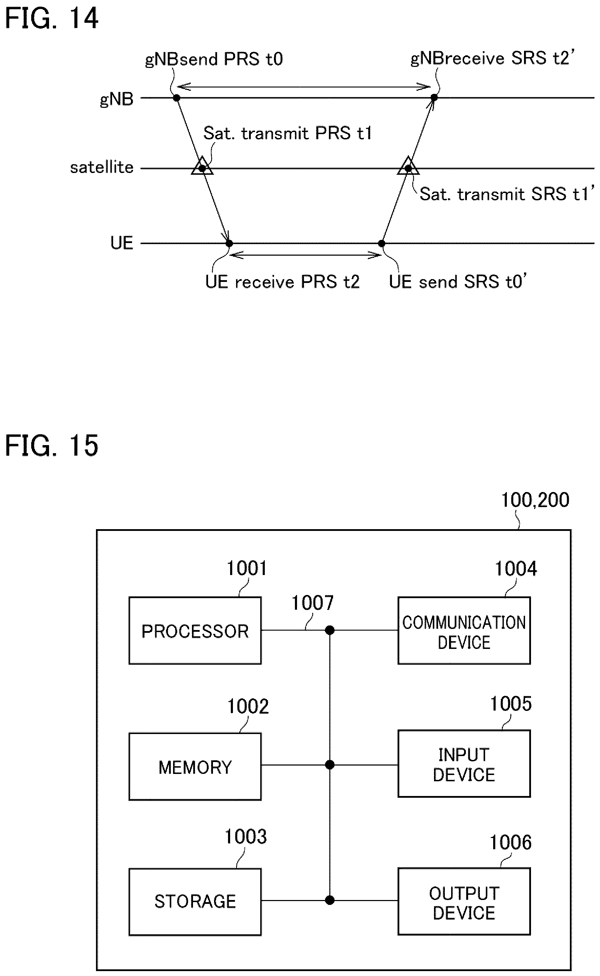

FIG. 14 is a diagram for explaining a method of calculating a satellite position. As illustrated in FIG. 14, the satellite position corresponding to time t1 at which the satellite 150 transmits and receives the PRS and the satellite position corresponding to time t1' at which the satellite 150 transmits and receives the SRS can be calculated using the following two options.

### <Option 1>

The satellite position P0 corresponding to time t0 and the satellite position P2 corresponding to time t2 can be acquired from the satellite ephemeris. Similarly, the satellite position P0' corresponding to time t0' and the satellite position P2' corresponding to time t2' can be acquired from the satellite ephemeris.

Based on these satellite positions and orbit parameters, the gNB 100 and/or the LFM configure the satellite position P1 corresponding to time t1 and the satellite position P1' corresponding to time t1'

Specifically, the gNB 100 and/or the LFM configure the satellite position P1 at the middle point of the orbit connecting the satellite position P0 and the satellite position P2 by using the orbit parameters. In addition, the gNB 100 and/or the LFM configure the satellite position P1' at the middle point of the orbit connecting the satellite position P0' and the satellite position P2' by using the orbit parameters. That is, the satellite position at the middle point of the orbit connecting the two known satellite positions can be approximately acquired by using the orbit parameters.

According to option 1, the accuracy of the reference position P1 and the satellite position P1' can be improved by using the orbit parameters.

### <Option 2>

The gNB 100 and/or the LFM calculates the travel distance ΔPt of the satellite 150 from time t0 until the propagation delay tp elapses. The travel distance ΔPt is calculated based on the orbit and velocity of the satellite 150 acquired from the satellite ephemeris, and the propagation delay tp. The propagation delay tp is the time from when the gNB 100 transmits a PRS to when the satellite 150 receives the PRS.

The gNB 100 and/or the LFM configure the position away from the position P0 by the travel distance ΔPt as the reference position P1. Similarly, the gNB 100 and/or the LFM configure the position away from the position P2' by the travel distance ΔPt as the reference position P1', based on the propagation delay tp'. The propagation delay tp' is the time from when the satellite 150 transmits an SRS to when the gNB 100 receives the SRS.

According to option 2, the accuracy of the reference position P1 and the reference position P1' can be improved by using the orbit and velocity of the satellite 150, the propagation delay tp, and the propagation delay tp'.

### <Calculation method of reference time>

When calculating a propagation delay, the gNB 100 and/or the LFM may configure the time indicated by Alt 1 and Alt 2 below as the reference time.

### <Alt 1>

The gNB 100 may configure time t0 at which the gNB 100 transmits a PRS, time t2 at which the UE 200 receives the PRS, time t0' at which the UE 200 transmits an UL-SRS, or time t2' at which the gNB 100 receives the UL-SRS as the reference time.

### <Alt 2>

The gNB 100 may configure time t1 at which the satellite 150 transmits or receives the PRS, or time t1' at which the satellite 150 transmits or receives the UL-SRS as the reference time.

In order to improve the accuracy of the position estimation of the UE 200, it is preferable to configure time t1 and time t1' as the reference times.

### (4) Operation and effect

According to the embodiment described above, the following operation and effect can be acquired. Specifically, the radio communication node 40 according to the embodiment of the present disclosure includes: a reception unit that acquires at least one of a position of a radio relay device in the sky at a transmission time or reception time of a signal by a terminal, a position of the radio relay device at a transmission time or reception time of a signal by the radio relay device, and a position of the radio relay device at a transmission time or reception time of a signal by a radio communication node; and a control unit that calculates a propagation delay of a signal transmitted and received between the terminal and the radio communication node via the radio relay device based on at least one of the three positions.

This configuration makes it possible for the radio communication node 40 to calculate the propagation delay of the signal by using at least one reference position of the three positions. Accordingly, even when the position of the radio relay device changes, an error in the propagation delay of the signal can be suppressed.

Further, the radio communication node 40 according to the embodiment of the present disclosure may be configured in such a way that the control unit calculates the propagation delay based on all of the three positions.

This configuration makes it possible for the radio communication node 40 to calculate the propagation delay of the signal, including the position of the radio relay device at a transmission and reception time of a radio wave by the radio relay device. Accordingly, even when the position of the radio relay device changes, an error in the propagation delay of the signal can be further suppressed.

The radio communication node 40 according to the embodiment of the present disclosure may be configured in such a way that the control unit calculates RTT (Round Trip Time) between the UE 200 and the radio communication node 40 as the propagation delay.

This configuration makes it possible to suppress an error in the propagation delay of the RTT (Round Trip Time), even when the position of the radio relay device changes.

### (5) Other Embodiments

Although the embodiment has been described as above, the present disclosure is not limited to the description of the embodiment, and it is obvious to those skilled in the art that various modifications and improvements are possible.

For example, in the embodiment described above, the terms such as a neighboring cell and an adjacent TA are used, but the terms "neighboring" and "adjacent" may be used interchangeably. Also, "adjacent" may mean a more limited area, and "neighboring" may mean a larger area than "adjacent".

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGS. 4 to 6) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

Further, the above-described gNB 100 and UE 200 (the device) may function as a computer that performs processing of a radio communication method of the present disclosure. FIG. 15 is a diagram illustrating an example of a hardware configuration of the device. As illustrated in FIG. 15, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the devices (FIGS. 4 to 6) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), the 6th generation mobile communication system (6G), the xth generation mobile communication system (xG) (where x is, for example, an integer or decimal), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, a base station transmitting information to a terminal may be interpreted as the base station instructing the terminal to control or operate based on the information.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel(or a side link).

Similarly, the mobile station in the present disclosure may be read as meaning a base station. In this case, the base station may have the function of the mobile station.

A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a Physical Resource Block (PRB), a Sub-Carrier Group (SCG), a resource element group (REG), a PRB pair, a RB pair, and the like.

A resource block may be configured by one or more Resource Elements (REs). For example, one RE may be a radio resource domain of one subcarrier and one symbol.

A Bandwidth Part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the Cyclic Prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a Pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

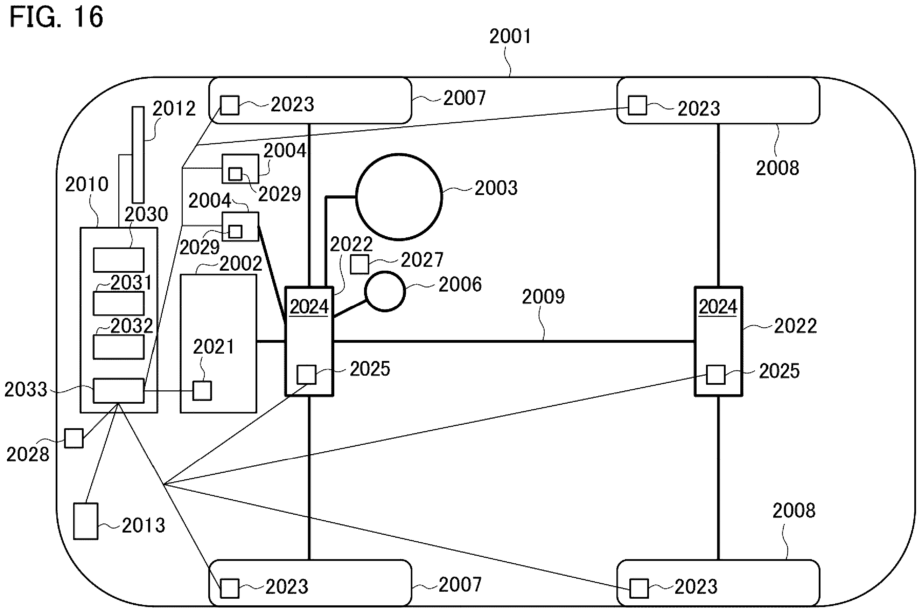

FIG. 16 shows a configuration example of a vehicle 2001. As shown in FIG. 16, the vehicle 2001 includes a drive 2002, a steering 2003, an accelerator pedal 2004, a brake pedal 2005, a shift lever 2006, left and right front wheels 2007, left and right rear wheels 2008, an axle 2009, an electronic controller 2010, various sensors 2021 to 2029, an information service unit 2012, and a communication module 2013.

Examples of the drive 2002 include, an engine, a motor, and a hybrid of an engine and a motor. The steering 2003 includes at least a steering wheel (also called a handle) and steers at least one of the front and rear wheels based on an operation of a steering wheel operated by a user. The electronic controller 2010 includes a microprocessor 2031, a memory (ROM, RAM) 2032, and a communication port (IO port) 2033. The electronic controller 2010 receives signals from various sensors 2021 to 2027 provided in the vehicle. The electronic controller 2010 may be called an ECU (Electronic Control Unit).

The signals from the various sensors 2021 to 2028 include a current signal from a current sensor 2021 for sensing current of a motor, a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 includes various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to an occupant of the vehicle 1 by using information acquired from an external device through a communication module 2013 and the like.

A driver support system unit 2030 comprises various devices such as a millimeter wave radar, a light detection and ranging (LiDAR), a camera, a positioning locator (for example, GNSS), map information (for example, high-definition (HD) maps, autonomous vehicle (AV) maps, and the like), a gyroscopic system (for example, an inertial measurement unit (IMU), an inertial navigation system (INS), and the like), an artificial intelligence (AI) chip, and an AI processor for providing functions to prevent accidents or reduce a driving load of a driver, and one or more ECUs for controlling these devices. Further, the driver support system unit 2030 transmits and receives various kinds of information through the communication module 2013 to realize a driver support function or an automatic driving function.

The communication module 2013 can communicate with the microprocessor 2031 and components of the vehicle 1 through a communication port. For example, the communication module 2013 transmits and receives data through the communication port 2033 to and from the drive 2002, steering 2003, accelerator pedal 2004, brake pedal 2005, shift lever 2006, left and right front wheels 2007, left and right rear wheels 2008, axle 2009, microprocessor 2031 in the electronic control 2010, memory (ROM, RAM) 2032, and sensor 2021 to 2028.

The communication module 2013 is a communication device that can be controlled by the microprocessor 2031 of the electronic controller 2010 and can communicate with an external device. For example, The communication module 2013 transmits and receives various kinds of information via radio communication with the external device. The communication module 2013 may be placed inside or outside the electronic control unit 2010. Examples of the external device may include a base station, a mobile station, and the like.

The communication module 2013 transmits a current signal coming from a current sensor and input to the electronic controller 2010 to an external device via radio communication. Further, the communication module 2013 transmits a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic controller 2010 to an external device via radio communication.

The communication module 2013 receives various information (traffic information, signal information, inter-vehicle information, and the like.) transmitted from the external device and displays on the information service unit 2012 provided in the vehicle. Further, the communication module 2013 stores various information received from the external device in a memory 2032 usable by the microprocessor 2031. Based on the information stored in the memory 2032, the microprocessor 2031 may control the drive 2002, the steering 2003, the accelerator pedal 2004, the brake pedal 2005, the shift lever 2006, the left and right front wheels 2007, the left and right rear wheels 2008, the axle 2009, the sensors 2021 to 2028, and the like provided in the vehicle 2001.

### <Note>

The radio communication node of the present embodiment may be configured as a terminal described in the following sections. Further, the following radio communication method may be implemented.

### (Section 1)

A radio communication node includes:
a reception unit that acquires at least one of a position of a radio relay device in the sky at a transmission time or reception time of a signal by a terminal, a position of the radio relay device at a transmission time or reception time of a signal by the radio relay device, and a position of the radio relay device at a transmission time or reception time of a signal by a radio communication node; and a control unit that calculates a propagation delay of a signal transmitted and received between the terminal and the radio communication node via the radio relay device based on at least one of the three positions.

### (Section 2)

The radio communication node according to claim 1, wherein the control unit calculates the propagation delay based on all of the three positions.

### (Section 3)

The radio communication node according to claim 1 or 2, wherein the control unit calculates RTT (Round Trip Time) between the terminal and the radio communication node as the propagation delay.

### (Section 4)

A terminal includes a transmission unit that transmits a position of a radio relay device in the sky to a radio communication node at a transmission time or reception time of a signal by a terminal,
wherein the terminal causes the radio communication node to calculate a propagation delay of a signal transmitted and received between the terminal and the radio communication node via the radio relay device, based on at least one of the position transmitted from the transmission unit, a position of the radio relay device at a transmission time or reception time of a signal by the radio relay device, and a position of the radio relay device at a transmission time or reception time of a signal by the radio communication node.

### (Section 5)

A radio communication method includes:
a step of, by a radio communication node, acquiring at least one of a position of a radio relay device in the sky at a transmission time or reception time of a signal by a terminal, a position of the radio relay device at a transmission time or reception time of a signal by the radio relay device, and a position of the radio relay device at a transmission time or reception time of a signal by the radio communication node; and
a step of, by the radio communication node, calculating a propagation delay of a signal transmitted and received between the terminal and the radio communication node via the radio relay device based on at least one of the three positions.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 radio communication system
20 NG-RAN
30 core network
40 radio communication node
100 gNB
100X NTN gateway
110 reception unit
120 transmission unit
130 control unit
150 satellite
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
300 LMF
310 Reception unit
320 Transmission unit
330 Control unit
1001 Processor
1002 Memory
1003 Storage
1004 Communication device
1005 Input device
1006 Output device
1007 Bus
2001 Vehicle
2002 Drive unit
2003 Steering unit
2004 Axel pedal
2005 Brake pedal
2006 Shift lever
2007 Left and right front wheels
2008 Left and right rear wheels
2009 Axles
2010 Electronic control unit
2012 Information service unit
2013 Communication module
2021 Current sensor
2022 Rotational speed sensor
2023 Air pressure sensor
2024 Vehicle speed sensor
2025 Acceleration sensor
2026 Brake pedal sensor
2027 Shift lever sensor
2028 Object detection sensor
2029 Axel pedal sensor
2030 Operation support system unit
2031 Microprocessor
2032 Memory (ROM, RAM)
2033 Communication port

## Claims

1. A radio communication node comprising:
a reception unit that acquires at least one of a position of a radio relay device in the sky at a transmission time or reception time of a signal by a terminal, a position of the radio relay device at a transmission time or reception time of a signal by the radio relay device, and a position of the radio relay device at a transmission time or reception time of a signal by a radio communication node; and
a control unit that calculates a propagation delay of a signal transmitted and received between the terminal and the radio communication node via the radio relay device based on at least one of the three positions.

2. The radio communication node according to claim 1,
wherein the control unit calculates the propagation delay based on all of the three positions.

3. The radio communication node according to claim 1,
wherein the control unit calculates RTT (Round Trip Time) between the terminal and the radio communication node as the propagation delay.

4. A radio communication method comprising:
a step of, by a radio communication node, acquiring at least one of a position of a radio relay device in the sky at a transmission time or reception time of a signal by a terminal, a position of the radio relay device at a transmission time or reception time of a signal by the radio relay device, and a position of the radio relay device at a transmission time or reception time of a signal by the radio communication node; and
a step of, by the radio communication node, calculating a propagation delay of a signal transmitted and received between the terminal and the radio communication node via the radio relay device based on at least one of the three positions.
